# FASCICULE DE BREVET EUROPEEN

(11) **EP 3 728 022 B1**
(45) Date de publication et mention de la délivrance du brevet: **15.09.2021**
(21) Numéro de dépôt: 18830419.0
(22) Date de dépôt: 13.12.2018
(51) Int. Cl.: B64C 1/14

(54) **SYSTEME D'OUVERTURE DE PORTE D'AVION**
FLUGZEUGTÜRÖFFNUNGSSYSTEM
AICRAFT DOOR OPENING SYSTEM

(30) Priorité: 19.12.2017 FR 1762409
(43) Date de publication de la demande: 28.10.2020
(73) Titulaire: Latecoere, 31500 Toulouse, Occitanie (FR)
(72) Inventeur: ROMEC, Christian, 31120 Saint-Loup-Cammas Occitanie (FR); OTHOMENE, Renaud, 31500 Toulouse Occitanie (FR)
(74) Mandataire: Junca, Eric
(86) Numéro de dépôt international: PCT/EP2018/084801
(87) Numéro de publication internationale: WO 2019/121337

(56) Documents cités:
- US-A- 5 031 863
- US-A1- 2017 183 079

## Description

### DOMAINE TECHNIQUE

L'invention se rapporte un système d'ouverture de porte auxiliaire d'avion comportant un mécanisme monté sur le fuselage de l'avion et constitué de liaisons articulées formant des quadrilatères articulés entre la porte et le fuselage.

Sur les aéronefs actuels, les portes de secours situées au-dessus de la voilure de l'avion dites portes « overwing » en terminologie anglaise assurent, en dehors de sa fonction d'évacuation des passagers en situation d'urgence, l'accès à l'extrados voilure. Les aéronefs sont également équipés de porte cargo qui assure le chargement / déchargement du fret. De telles portes à dégagement extérieur à partir du bas vers le haut sont ci-après dénommés « portes auxiliaires » par opposition aux portes « passagers » d'embarquement / débarquement des passagers des avions commerciaux, de conception sensiblement plus complexe (dimensionnement, poids, intégration des toboggans, bras massif d'articulation horizontal, etc.).

De manière générale, l'ouverture d'une porte d'avion, par exemple d'une porte passagers ou auxiliaire, peut se décomposer en plusieurs mouvements qui se succèdent: déverrouillage et libération d'un cran de sûreté, levage et pivotement de la porte par des actionneurs autour d'un axe de rotation. Pour la fermeture, ces mouvements se succèdent selon une cinématique inverse.

Les portes auxiliaires sont équipées soit d'un bras articulé sur le fuselage, le bras étant lié à la porte par un mécanisme de libération de butées par translation, soit par une charnière. En général les charnières des portes de type « overwing » sont du type bras articulée et permet un désengagement des butées. La charnière rigide de type « charnière piano », entre le fuselage et la porte, nécessite un mécanisme indépendant chargé de libérer les ferrures du fuselage. Une telle charnière à piano équipe classiquement les portes cargo.

### ÉTAT DE LA TECHNIQUE

Des charnières rigides d'ouverture de porte d'aéronefs sont divulguées par exemple dans les documents de brevet US6276026, US2007257151, ou US2016083071. Afin d'améliorer l'étanchéité des charnières rigides de porte d'avion, il a été proposé d'utiliser un joint entre la porte et le fuselage de l'avion. Une telle solution est par exemple décrite dans le brevet US 20090095841. La charnière piano présente l'avantage de nécessiter peu d'espace mais nécessite en revanche un joint d'étanchéité de recouvrement adaptable si on veut que les charnières ne soient pas exposées au flux de l'air.

Cependant, la liaison rigide entre le fuselage et la porte génère des efforts d'interaction de niveau élevé lors des déformations du fuselage en vol. Ces efforts s'insèrent dans la porte et altèrent sa structure. En outre, l'installation d'une charnière rigide nécessite une haute précision aussi bien en liaison avec le fuselage qu'avec la porte. De plus, ces charnières rigides possèdent une face externe montée de manière non affleurant sur la peau extérieure du fuselage, ce qui perturbe l'aérodynamisme de cette zone lors de la pénétration dans l'air.

On connaît également du document de brevet US 5031863 un système d'ouverture de trappe auxiliaire d'avion dans lequel deux bras parallèles de charnière sont montés en pivotement sur le fuselage et sur la trappe via des leviers de levage supérieurs et inférieurs. Les bras de charnière opèrent un mouvement de pivotement de la trappe vers le haut et vers l'extérieur. Cette solution fournit une articulation rigide et ne permet pas d'adaptabilité entre la trappe et le fuselage lors du pivotement de la trappe.

Par ailleurs, le document de brevet US 20170183079 divulgue un ensemble de connexion de porte d'aéronef sur une section de fuselage comportant une double charnière principale connectée à la section de fuselage et un assemblage de liaison entre la porte et la charnière principale. Cet assemblage intégrant un élément connecté à la porte par coulissement et pivotement. Un tel assemblage permet de déplacer la porte vers le haut et l'intérieur par pivotement autour d'un point de pivotement virtuel. Cependant, un tel assemblage à deux charnières latérales identiques présente les mêmes limites que celui du document US 5031863 précédemment cité.

### EXPOSÉ DE L'INVENTION

L'invention vise à éliminer ces inconvénients à l'aide d'une charnière de porte comportant un jeu de liaison à leviers articulés formant entre eux des configurations géométriques à quadrilatères évolutifs pendant la cinématique d'ouverture de porte. Ces configurations autorisent une « flottabilité » de la porte par rapport au fuselage, le terme flottabilité signifie une adaptation instantanée, sans provoquer de contrainte, de la charnière par l'instauration de liaisons souples opérées par la combinaison de leviers. Une telle flottabilité supprime ainsi les efforts d'interaction des charnières rigides, tout en permettant d'en simplifier le montage. De plus, l'ensemble des liaisons étant intégré au fuselage, l'aérodynamisme de l'aéronef n'est plus perturbé.

A ce titre, la présente invention a pour objet un système d'ouverture d'une porte auxiliaire d'avion dans un fuselage, la porte et le fuselage ayant des peaux dans le prolongement l'une de l'autre. Ce système comporte un linteau d'encadrement de la porte auxiliaire intégré au fuselage et une poutre supérieure de structure de porte disposée en regard du linteau. De plus, ce système comporte un jeu d'au moins trois liaisons à leviers s'étendant transversalement par rapport aux peaux de porte et de fuselage pour former un couplage de la porte au linteau. Chaque liaison est reliée, d'une part, audit linteau par une articulation de levier fixe par rapport au fuselage et, d'autre part, à ladite poutre supérieure par une articulation de levier mobile en pivotement avec la porte lors de son ouverture, les articulations étant formées en extrémité des leviers et raccordées respectivement au linteau et à la poutre supérieure par des moyens de fixation. Le jeu de liaisons comporte un premier et un deuxième types de liaison montés en alternance. Dans deux types de liaison successifs, les articulations mobiles en pivotement et les articulations fixes sont positionnées tête-bêche, de sorte que les articulations mobiles et fixes de deux leviers adjacents forment un quadrilatère évolutif qui pilote la cinématique d'ouverture de la porte en maintenant une souplesse d'articulation entre le linteau et la poutre supérieure.

Dans ces conditions, le mécanisme à leviers articulés selon des quadrilatères articulés permet une flottabilité et une adaptabilité entre le fuselage et la porte, ce qui supprime les efforts d'interaction du fuselage sur la porte. De plus, ce mécanisme permet de réduire sensiblement le nombre de pièces pour les fonctions de positionnement de la porte dans son encadrement lors de sa fermeture, d'augmenter la résistance à la pression interne pendant la phase de vol, de faciliter le pilotage de la cinématique de la porte pendant l'ouverture, et le maintien de la porte en position ouverte.

Selon des modes de mise en œuvre préférés :
- la poutre supérieure de structure de porte présentant une face supérieure perpendiculaire à la peau de la porte, une ferrure comme moyen de fixation reliant les articulations des leviers du premier type de liaison à ladite poutre supérieure comporte une base de fixation s'étendant sur la face supérieure de ladite poutre;
- le linteau présentant une face inférieure perpendiculaire à la peau de fuselage et une face avant parallèle à la peau de fuselage, une ferrure comme moyen de fixation reliant les articulations des leviers du premier type de liaison au linteau présente une face de fixation en équerre en partie sur la face inférieure et en partie sur la face avant du linteau;
- la poutre supérieure de structure de porte présentant une face avant parallèle à la peau de porte et perpendiculaire à la face supérieure de ladite poutre, une ferrure comme moyen de fixation reliant les articulations du deuxième type de liaison à la poutre supérieure de structure de porte est fixée en partie sur la face supérieure et en partie sur la face frontale de ladite poutre supérieure;
- une ferrure comme moyen de fixation qui relie les articulations du deuxième type de liaison au linteau présente une base de fixation s'étendant sur la face inférieure du linteau;
- le jeu de liaisons comporte trois leviers, deux leviers du premier type de liaison entourant un levier central du deuxième type;
- un panneau d'isolation s'étend à partir d'une zone d'extrémité de la peau de fuselage et en avant de cette zone, ce panneau étant en appui sur un joint de porte lorsque la porte est en position fermée;
- un système de compensation de masse, comportant par exemple au moins un vérin, de type hydromécanique ou autre, est agencé en prolongement d'au moins un des leviers, en particulier du levier central du deuxième type dans le cas d'un jeu de liaison à trois leviers;
- les ferrures fixées sur la poutre supérieure de porte et reliées aux articulations des leviers du premier type de liaison sont de forme en col de cygne, alors que les leviers du deuxième type de liaison présentent un profil latéral de forme courbe tournée vers la poutre supérieure de porte, afin de bien contourner la zone d'extrémité du fuselage lors du pivotement de la porte jusqu'à sa position d'ouverture maximale;
- une barre de rigidification relie, parallèlement au linteau, les articulations des leviers du premier type les plus éloignées de la peau du fuselage.

Dans le présent texte, les qualificatifs «supérieur» et « inférieur » se réfèrent à des localisations relatives standard d'éléments, lorsque l'avion est au sol. Le qualificatif « longitudinal » se réfère à la direction de l'extension principale d'un élément. « Avant » et « arrière » se réfèrent à des localisations respectivement du côté plus éloigné de la peau du fuselage, c'est-à-dire à l'intérieur d'une cabine passagers de l'avion, et du côté plus proche de la peau interne du fuselage, donc à proximité de la paroi interne de cette cabine. « Transversal » qualifie une étendue dans un plan perpendiculaire à la direction longitudinale du fuselage et « latérale » une étendue vue dans un plan transversal. De plus, les qualificatifs « extérieur» et « interne » se rapportent à des localisations hors et dans l'avion.

### PRÉSENTATION DES FIGURES

D'autres données, caractéristiques et avantages de la présente invention apparaîtront à la lecture de la description non limitée qui suit, en référence aux figures annexées qui représentent, respectivement :
- les figures 1a et 1b, des vues en perspective respectivement globale et plus détaillée, d'un exemple de système d'ouverture de porte auxiliaire d'avion selon l'invention muni d'un mécanisme à trois leviers, la porte étant en position fermée;
- les figures 2a et 2b, des vues latérales du mécanisme de porte à trois leviers de la figure 1 en regard d'un levier du premier type et en regard du levier central du deuxième type, la porte étant en position fermée;
- les figures 3a à 3c, des vues en perspective de l'exemple de système de la figure 1 lors de la cinématique d'ouverture de porte, selon deux positions d'ouverture intermédiaire de la porte (figure 3a et 3b) et selon la position d'ouverture maximale de la porte (figure 3c), et
- les figures 4a et 4b, des vues latérales du mécanisme de porte à trois leviers de la figure 1 en regard d'un levier du premier type et en regard du levier central du deuxième type, la porte étant en position d'ouverture maximale.

### DESCRIPTION DETAILLÉE

Sur les figures, des signes de référence identiques renvoient à un même élément ainsi qu'aux passages de la description correspondants.

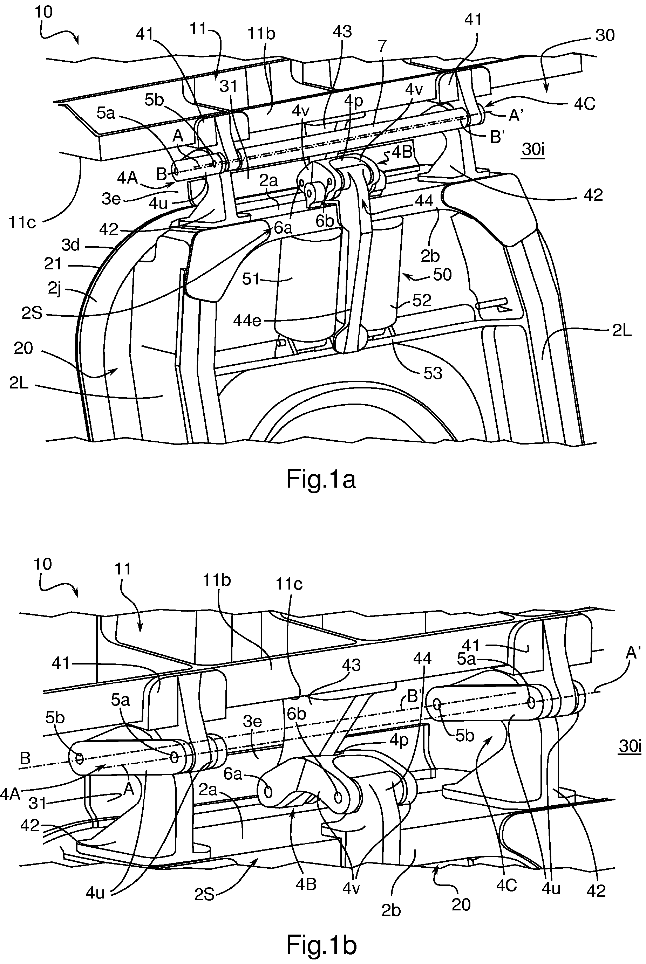

Les vues en perspective globale et respectivement plus détaillée des figures 1a et 1b illustrent, à l'intérieur d'une cabine passagers d'avion, un exemple selon l'invention de système d'ouverture 10 de porte auxiliaire munie d'une peau 20 intégrée dans une découpe 3d de la peau de fuselage 30. Pour des raisons de simplification et de lisibilité des figures, la porte et le fuselage ne sont pas représentés en volume et peuvent être assimilés, pour la compréhension, à leurs peaux 20 et 30.

Le système 10 comporte un linteau 11 d'encadrement supérieur de la porte 20. Ce linteau 11 est intégré au fuselage par fixation, sur la face interne 30i de la peau de fuselage 30, de sa face longitudinale arrière 11a par tout moyen connu (soudage, collage, fusion thermique, sertissage, cocuisson, etc.). Le système d'ouverture 10 couple la porte 20 au linteau 11.

Ladite porte 20 possède une structure d'encadrement interne composée d'une poutre supérieure 2S, disposée en regard du linteau 11, de deux poutres latérales 2L et d'une poutre inférieure (non visible) parallèle à la poutre supérieure 2S. La porte 20 est maintenue en position fermée par des moyens d'immobilisation classiquement rapportés sur la poutre inférieure.

Dans cet exemple, le mécanisme de couplage 40 est constitué d'un jeu de trois liaisons à leviers 4A, 4B et 4C entre le linteau 11 et la poutre supérieure 2S s'étendant transversalement, c'est-à-dire sensiblement parallèlement aux poutres latérales 2L ainsi que perpendiculairement aux peaux de porte 20 et de fuselage 30. Les liaisons à leviers 4A et 4C, qui entourent la liaison à levier central 4B, sont identiques et sont dits du premier type. Ils sont reliés au linteau 11 par fixation de ferrures identiques 41 s'étendant, en équerre, sur sa face longitudinale avant 11b parallèle à sa face arrière 11a, et sur sa face longitudinale inférieure 11c perpendiculaire aux faces avant 11b et arrière 11a. De plus, les leviers 4A et 4C sont reliés à la poutre supérieure 2S de la porte 20 par d'autres ferrures identiques 42, en « col de cygne » dans l'exemple illustré, fixées sur la face supérieure 2a de la poutre supérieure 2S.

Chaque levier 4A ou 4C des liaisons du premier type présente dans cet exemple deux ailerons parallèles, rectilignes et identiques 4u qui, en leurs extrémités opposées, forment deux articulations: une articulation 5a en rotation axiale avec une extrémité de la ferrure 41 qui vient en prise entre les deux ailerons 4u, et une articulation 5b en rotation axiale avec une extrémité de la ferrure 42 qui vient aussi en prise entre les deux ailerons 4u. Les articulations d'extrémité 5a relient les leviers 4A et 4C au linteau 11 de manière fixe, alors que les articulations d'extrémité 5b relient les leviers 4A et 4C à la poutre supérieure 2S de manière mobile, en pivotement avec la porte 20.

En outre, les articulations 5a et 5b sont alignées respectivement sur un axe de rotation fixe A'A et un axe de rotation mobile B'B, parallèles aux peaux de porte 20 et de fuselage 30. L'axe de rotation mobile B'B, et donc les articulations 5b, restent à proximité de la face interne 30i de la peau de fuselage 30 alors que l'axe de rotation fixe A'A, et donc les articulations 5a, restent plus éloignés et à distante constante de cette face interne 30i.

Dans la liaison à levier central 4B, ce levier 4B est relié au linteau 11 par une ferrure 43 fixée sur la face inférieure 11c du linteau 11 et à la poutre supérieure 2S par une ferrure 44 s'étendant, en équerre, sur la face supérieure 2a et sur la face avant 2b de la poutre supérieure 2S.

De plus, le levier central 4B présente ici deux ailerons 4v de profil latéral globalement courbe, tournée vers la poutre supérieure de porte 2S, et reliés par un pont central 4p donnant une forme en « H » à ce levier central 4B. Aux extrémités de ces ailerons 4v, deux articulations sont également formées: une articulation 6a en rotation axiale avec une extrémité de la ferrure 43 qui s'étend entre les deux extrémités d'ailerons 4v, et une articulation 6b en rotation axiale avec une extrémité de la ferrure 44 qui s'étend également entre les deux ailerons 4v. Ainsi, l'articulation d'extrémité 6a relie le levier central 4B au linteau 11 de manière fixe via la ferrure 43, alors que l'articulation d'extrémité 6b relie ce levier central 4B en pivotement avec la porte 20 via la ferrure 44.

Ainsi, il apparaît que chaque couple de leviers adjacents, les leviers 4A et 4B d'une part et les leviers 4B et 4C d'autre part, possède des articulations 5a, 5b, 6a et 6b formant un quadrilatère avec deux articulations opposées 5a et 6a fixes par rapport au linteau 11 (et donc au fuselage 30), auquel elles sont reliées par les ferrures 41 et 43, et avec deux articulations opposées 5b et 6b mobiles en pivotement avec la poutre supérieure 2S (et donc avec la porte), à laquelle elles sont reliées par les ferrures 42 et 44.

Par ailleurs, la face interne du fuselage 30i présente avantageusement un panneau d'isolation 31 s'étendant à partir d'une zone d'extrémité de peau 3e du fuselage 30, en se décalant en avant de la découpe de fuselage 3d et jusqu'à venir en appui sur un joint de porte 2j qui court le long du pourtour 21 de la peau de porte 20.

En outre, un système de compensation de masse 50 utile pendant l'ouverture de porte, et comportant dans l'exemple deux vérins 51 et 52, est monté avantageusement dans le prolongement du levier central 4B. Ce montage est réalisé entre la poutre supérieure 2S et un bras support 53 fixé parallèlement à la poutre supérieure 2S, entre les poutres latérales 2L. Le levier central 4B ayant une amplitude de mouvement angulaire plus importante que les autres par rapport à la porte 20, le système de compensation 50 présente alors une course plus faible, ce qui permet de réduire la course de la compensation de masse. Il apparaît également que la ferrure 44 se prolonge par une extension longitudinale 44e qui est fixée en extrémité sur le bras support 53.

Avantageusement, une barre de rigidification cylindrique 7 (qui n'apparaît pas sur la figure 1b pour des raisons de visibilité) relie, parallèlement à la poutre supérieure 2S, les articulations 5a des leviers 4A et 4C du premier type de liaison les plus éloignées de la face interne de fuselage 30i. L'axe géométrique de cette barre 7 coïncide avec l'axe A'A de rotation fixe des articulations 5a. Une telle rigidification permet de s'assurer d'un fonctionnement uniforme des leviers 4A à 4C.

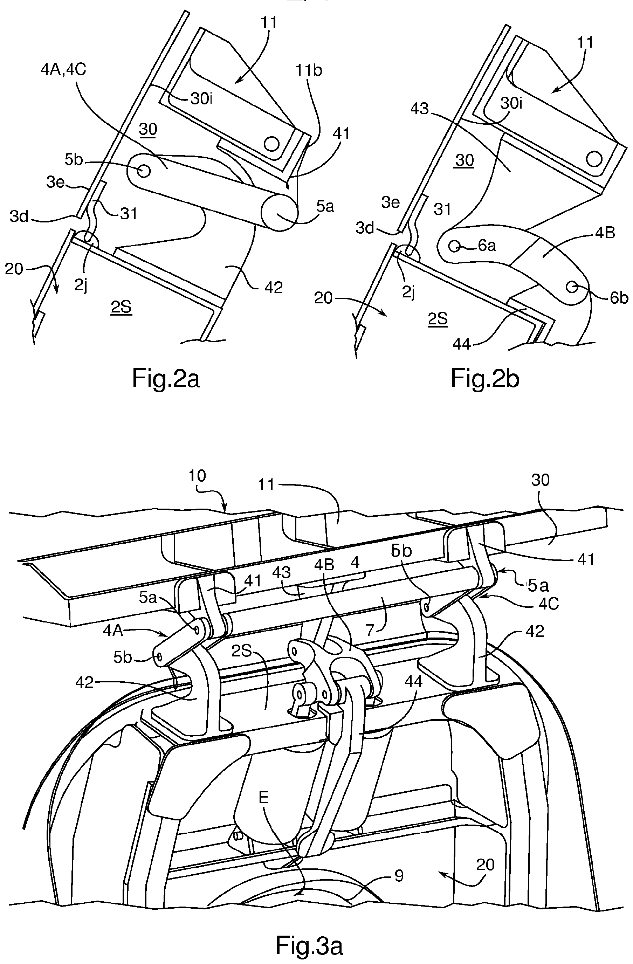

Les vues latérales des figures 2a et 2b illustrent respectivement, sous un autre angle, la position des liaisons à leviers du premier type, 4A ou 4C, et la position de la liaison à levier du deuxième type 4B, lorsque la porte est en position fermée dans la découpe 3d de la peau de fuselage 30. Sur ces figures, il apparaît de manière plus précise la liaison entre le panneau d'isolation 31 et la zone d'extrémité de peau 3e du fuselage 30, ainsi que l'appui de ce panneau 31 sur le joint 2j de la porte.

Sur la vue latérale de la figure 2a, il apparaît que les articulations fixes 5a, liés directement au linteau 11 via la ferrure 41, sont positionnées au niveau de la face avant 11b du linteau 11, et donc de manière plus éloignée que les articulations 5b qui se trouvent à proximité de la face interne de fuselage 30i. Et ces articulations 5b, liées à la poutre supérieure 2S par les ferrures en col de cygne 42, vont pouvoir être entraînées en pivotement autour des articulations 5a lors de l'ouverture de la porte.

La vue latérale de la figure 2b montre également que l'articulation d'extrémité 6a du levier central 4B est reliée de manière fixe au linteau 11 via la ferrure 43, et que l'articulation d'extrémité 6b de ce levier central 4B, reliée à la poutre supérieure 2S via la ferrure 44, va pouvoir entraîner le levier 4B en pivotement avec la porte 20 autour de l'autre extrémité 6a.

La cinématique d'ouverture de la porte 20 par le système 10 est illustrée par les vues en perspective des figures 3a à 3c, la porte 20 étant vue partiellement en transparence à travers la peau de fuselage 30. Avant ouverture, la porte est maintenue en position fermée par des moyens d'immobilisation rapportés sur la poutre inférieure de structure de porte (non visible), en particulier un mécanisme de maintien rigide de type verrou « C-latch » (« C » comme cylindrique) à déverrouillage commandé par la poignée d'ouverture. Les liaisons à leviers 4A à 4C assurent l'ouverture de la porte par pivotement autour du linteau 11.

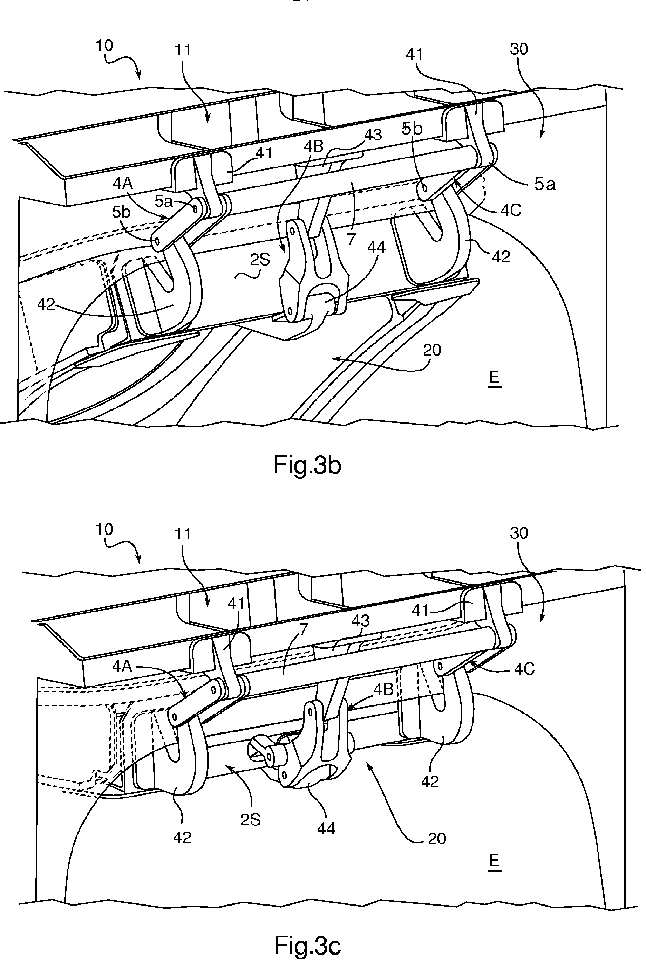

Sur les figures 3a et 3b, il apparaît que, une fois libérée des moyens d'immobilisation (non visibles sur les figures), la porte 20 pivote hors de l'avion, à l'extérieur « E » de la peau de fuselage 30 - visible à travers le hublot 9 -, autour des articulations fixes 5a et 6a des leviers 4A à 4C reliées au linteau 11 via les ferrures 41 et 43, ainsi qu'autour de la barre 7 qui relie les articulations 5a des leviers du premier type de liaison 4A et 4C.

Les autres articulations 5b et 6b des leviers 4A à 4C, reliées à la poutre supérieure de porte 2S via les ferrures 42 et 44, pivotent alors avec la porte 20. Les quadrilatères ayant pour sommets les articulations 5a, 5b, 6a et 6b se déforment avec la position variable des articulations opposées 5b et 6b, alors que la position des autres articulations opposées 5a et 6a est fixe. La position des articulations 5a, 5b, 6a et 6b pilotent ainsi la cinématique d'ouverture de la porte, tout en permettant une certaine « flottabilité » ou souplesse d'adaptation aux liaisons entre la poutre supérieure 2S et le linteau 11.

Sur la figure 3c, la porte 20 atteint sa position d'ouverture maximale. Cette position est maintenue par des moyens de blocage connus - des mâchoires, des crochets, des butées - ou par la pression exercée par les vérins 51 et 52 (cf. figures 1a ou 3a) qui forment le système de compensation de masse au cours de l'ouverture par l'exercice d'une pression adaptée.

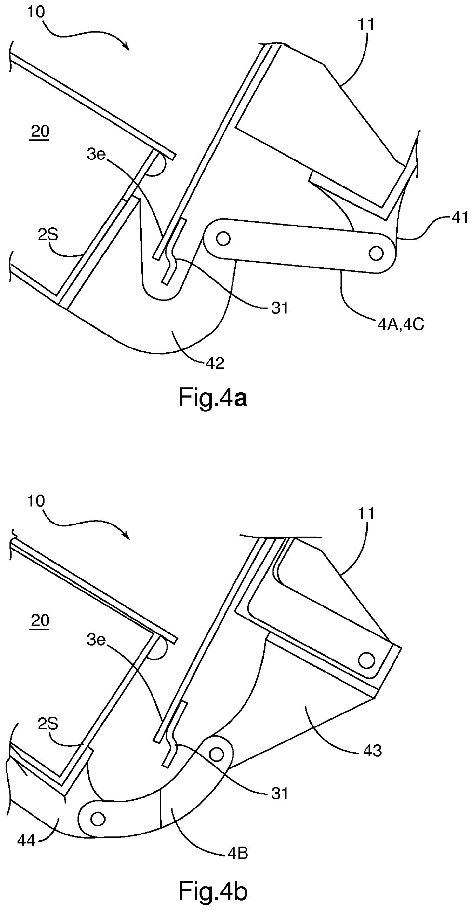

Les vues latérales des figures 4a et 4b illustrent également, respectivement au niveau des liaisons à levier du premier type, 4A ou 4C, et au niveau de la liaison à levier central du deuxième type 4B, la configuration du système d'ouverture 10 lorsque la porte 20 est en position d'ouverture maximale.

En particulier, sur ces vues latérales, il apparaît que la forme des ferrures 42 (figure 4a) et du levier 4B (figure 4b) permet de contourner avec précision, et de manière ajustée, l'avancée constituée par la zone d'extrémité de peau 3e du fuselage 30 et prolongée par le panneau d'isolation 31 qui s'étend à partir de cette zone. Dans le cas des leviers du premier type de liaison 4A et 4C entre les ferrures 41 et 42, fixées sur le linteau 11 et la poutre supérieure de porte 2S, ce contournement est avantageusement réalisé par la forme en col de cygne des ferrures 42 (figure 4a); dans le cas du levier du deuxième type de liaison 4B (figure 4b), ce contournement est réalisé par la forme de profil courbe de ce levier 4B entre les ferrures 43 et 44, fixées sur le linteau 11 et la poutre supérieure de porte 2S.

L'invention n'est pas limitée aux exemples de réalisation décrits et représentés. Ainsi, le système de compensation de masse peut comporter un ou plus de deux vérins qui peuvent être installés en prolongement du levier central ou d'autres leviers.

La face supérieure de la poutre supérieure de structure de porte peut ne pas être perpendiculaire à la peau de porte. De même, la face avant de la poutre supérieure ou le linteau peuvent ne pas être parallèle à la peau de porte ou de fuselage. D'autres types de ferrures et d'autres modes de fixation peuvent être prévus, y compris l'intégration dans le seuil de porte. Dans ce cas, les ferrures sont modifiées de sorte que l'axe de rotation AA' reste parallèle à l'axe de la charnière souhaitée (de façon générale selon la découpe du panneau), et que les articulations du premier et second type de liaison débattent dans des plans parallèles.

Par ailleurs, le système de blocage de la porte en position ouverte est installé sur un levier du premier type de liaison, du côté fuselage ou du côté porte, ou sur un levier du deuxième type de liaison, en particulier sur le levier central du deuxième type de liaison dans le cas d'un jeu de liaison à trois leviers, ce système de blocage pouvant alors être monté soit par l'intermédiaire du système de compensation soit entre le levier et le fuselage.

En outre, le profil des ferrures et des leviers est adapté pour permettre un contournement du fuselage pendant l'ouverture de la porte et peut adopter, outre les formes décrites ci-dessus, toute forme courbe ou concave adéquate.

De plus, les liaisons des deux types peuvent être centrées sur une liaison du premier ou du deuxième type.

## Revendications

1. Système d'ouverture (10) d'une porte auxiliaire (20) d'avion dans un fuselage, la porte et le fuselage ayant des peaux (20, 30) dans le prolongement l'une de l'autre, ledit système (10) comportant un linteau (11) d'encadrement de la porte auxiliaire intégré au fuselage et une poutre supérieure (2S) de structure de porte disposée en regard du linteau (11), **caractérisé en ce que** ledit système comporte un jeu d'au moins trois liaisons à leviers (4A, 4B, 4C) s'étendant transversalement par rapport aux peaux de porte (20) et de fuselage (30) pour former un couplage de la porte (20) au linteau (11), **en ce que** chaque liaison est reliée, d'une part, audit linteau (11) par une articulation de levier (5a, 6a) fixe par rapport au fuselage (30) et, d'autre part, à ladite poutre supérieure (2S) par une articulation du levier mobile en pivotement (5b, 6b) avec la porte (20) lors de son ouverture, les articulations (5a, 5b; 6a, 6b) étant formées en extrémité des leviers (4A, 4C; 4B) et raccordées respectivement au linteau (11) et à la poutre supérieure (2S) par des moyens de fixation (41, 43; 42, 44), et **en ce que** le jeu de liaisons comporte un premier et un deuxième types de liaison successifs montés en alternance, dans lesquels les articulations mobiles en pivotement (5b, 6b) et les articulations fixes (5a, 6a) sont positionnées tête-bêche, de sorte que les articulations mobiles et fixes (5b, 5a; 6b, 6a) de deux leviers adjacents (4A, 4B; 4B, 4C) forment un quadrilatère évolutif qui pilote la cinématique d'ouverture de la porte (20) en maintenant une souplesse d'articulation entre le linteau (11) et la poutre supérieure (2S).

2. Système d'ouverture selon la revendication 1 dans lequel, la poutre supérieure de structure de porte (2S) présentant une face supérieure (2a) perpendiculaire à la peau de porte (20), une ferrure (42) comme moyen de fixation reliant les articulations (5b) des leviers (4A, 4C) du premier type de liaison à ladite poutre supérieure (2S) comporte une base de fixation s'étendant sur la face supérieure (2a) de ladite poutre (2S).

3. Système d'ouverture selon l'une quelconque des revendications 1 ou 2 dans lequel, le linteau (11) présentant une face inférieure (11c) perpendiculaire à la peau de fuselage (30) et une face avant (11b) parallèle à la peau de fuselage (30), une ferrure (41) comme moyen de fixation reliant les articulations des leviers (4A, 4C) du premier type de liaison au linteau (11) présente une face de fixation en équerre en partie sur la face inférieure (11c) et en partie sur la face avant (11a) du linteau (11).

4. Système d'ouverture selon l'une quelconque des revendications 2 ou 3 dans lequel, la poutre supérieure de structure de porte (2S) présentant une face avant (2b) parallèle à la peau de porte (20) et perpendiculaire à la face supérieure (2a) de ladite poutre (2S), une ferrure (44) comme moyen de fixation reliant les articulations (6b) des leviers (4B) du deuxième type de liaison à la poutre supérieure de structure de porte (2S) est fixée en partie sur la face supérieure (2a) et en partie sur la face avant (2b) de ladite poutre supérieure (2S).

5. Système d'ouverture selon l'une quelconque des revendications 3 ou 4, dans lequel une ferrure (43) comme moyen de fixation qui relie les articulations (6a) des leviers (4B) du deuxième type de liaison au linteau (11) présente une base de fixation s'étendant sur la face inférieure (11c) du linteau (11).

6. Système d'ouverture selon l'une quelconque des revendications précédentes, dans lequel le jeu de liaisons comporte trois leviers (4A, 4B, 4C), deux leviers du premier type de liaison (4A, 4C) entourant un levier central du deuxième type (4B).

7. Système d'ouverture selon l'une quelconque des revendications précédentes, dans lequel un panneau d'isolation (31) s'étend à partir d'une zone d'extrémité (3e) de la peau de fuselage (30) et en avant de cette zone (3e), ce panneau (31) étant en appui sur un joint de porte (2j) lorsque la porte (20) est en position fermée.

8. Système d'ouverture selon l'une quelconque des revendications précédentes, dans lequel un système de compensation de masse (50) est installé dans la porte (20) en prolongement d'au moins un des leviers (4B).

9. Système d'ouverture selon la revendication précédente, **caractérisé en ce que** le système de compensation (50) comporte au moins un vérin (51, 52) agencé en prolongement d'au moins un levier (4A à 4B), le levier central (4B) dans le cas d'un jeu de liaisons à trois leviers selon la revendication 6.

10. Système d'ouverture selon l'une quelconque des revendications précédentes, dans lequel les ferrures (42) fixées sur la poutre supérieure de porte (2S) et reliées aux articulations (5b) des leviers (4A, 4C) du premier type de liaison sont de forme en col de cygne, alors que les leviers (4B) du deuxième type de liaison présentent un profil latéral de forme courbe tournée vers la poutre supérieure de porte (2S).

11. Système d'ouverture selon l'une quelconque des revendications précédentes, dans lequel une barre de rigidification (7) relie, parallèlement au linteau (11), les articulations (5a) des leviers (4A, 4C) du premier type de liaison les plus éloignées de la peau du fuselage (30).

## Patentansprüche

1. System zur Öffnung (10) einer Flugzeughilfstür (20) in einem Rumpf, wobei die Tür und der Rumpf Häute (20, 30) in der Verlängerung voneinander aufweisen, wobei das System (10) einen Sturz (11) zur Einrahmung der Hilfstür aufweist, der in den Rumpf integriert ist, und einen oberen Türstrukturpfosten (2S), der gegenüber dem Sturz (11) angeordnet ist, **dadurch gekennzeichnet, dass** das System einen Satz von mindestens drei Verbindungen mit Hebeln (4A, 4B, 4C) aufweist, die sich quer zu den Tür-(20) und Rumpf- (30) Häuten erstrecken, um eine Kopplung der Tür (20) an den Sturz (11) zu bilden, dadurch, dass jede Verbindung einerseits durch ein Hebelgelenk (5a, 6a), das bezogen auf den Rumpf (30) fest ist, mit dem Sturz (11) und andererseits durch ein Gelenk des Hebels, das mit der Tür (20) bei deren Öffnung schwenkbeweglich ist (5b, 6b), mit dem oberen Pfosten (2S) verbunden ist, wobei die Gelenke (5a, 5b; 6a, 6b) am Ende der Hebel (4A, 4C; 4B) ausgebildet und jeweils durch Befestigungsmittel (41, 43; 42, 44) an den Sturz (11) und an den oberen Pfosten (2S) angeschlossen sind, und dadurch, dass der Satz von Verbindungen einen aufeinanderfolgenden ersten und zweiten Verbindungstyp aufweist, die abwechselnd angebracht sind, wobei die schwenkbeweglichen Gelenke (5b, 6b) und die festen Gelenke (5a, 6a) gegenüberliegend positioniert sind, so dass die beweglichen und festen Gelenke (5b, 5a; 6b, 6a) zweier benachbarter Hebel (4A, 4B; 4B, 4C) ein veränderliches Viereck bilden, das die Öffnungskinematik der Tür (20) steuert, wobei eine Gelenkbeweglichkeit zwischen dem Sturz (11) und dem oberen Pfosten (2S) beibehalten wird.

2. Öffnungssystem nach Anspruch 1, wobei, der obere Türstrukturpfosten (2S) aufweisend eine Oberseite (2a), die senkrecht zur Türhaut (20) verläuft, ein Beschlag (42) als Befestigungsmittel, der die Gelenke (5b) der Hebel (4A, 4C) des ersten Verbindungstyps mit dem oberen Pfosten (2S) verbindet, eine Befestigungsbasis aufweist, die sich auf der Oberseite (2a) des Pfostens (2S) erstreckt.

3. Öffnungssystem nach einem der Ansprüche 1 oder 2, wobei, der Sturz (11) aufweisend eine Unterseite (11c), die senkrecht zur Rumpfhaut (30) verläuft, und eine Vorderseite (11b), die parallel zur Rumpfhaut (30) verläuft, ein Beschlag (41) als Befestigungsmittel, der die Gelenke der Hebel (4A, 4C) des ersten Verbindungstyps mit dem Sturz (11) verbindet, eine winkelige Befestigungsseite zum Teil auf der Unterseite (11c) und zum Teil auf der Vorderseite (11a) des Sturzes (11) aufweist.

4. Öffnungssystem nach einem der Ansprüche 2 oder 3, wobei, der obere Türstrukturpfosten (2S) aufweisend eine Vorderseite (2b), die parallel zur Türhaut (20) und senkrecht zur Oberseite (2a) des Pfostens (2S) verläuft, ein Beschlag (44) als Befestigungsmittel, der die Gelenke (6b) der Hebel (4B) des zweiten Verbindungstyps mit dem oberen Türstrukturpfosten (2S) verbindet, zum Teil auf der Oberseite (2a) und zum Teil auf der Vorderseite (2b) des oberen Pfostens (2S) befestigt ist.

5. Öffnungssystem nach einem der Ansprüche 3 oder 4, wobei ein Beschlag (43) als Befestigungsmittel, der die Gelenke (6a) der Hebel (4B) des zweiten Verbindungstyps mit dem Sturz (11) verbindet, eine Befestigungsbasis aufweist, die sich auf der Unterseite (11c) des Pfostens (11) erstreckt.

6. Öffnungssystem nach einem der vorhergehenden Ansprüche, wobei der Satz von Verbindungen drei Hebel (4A, 4B, 4C) aufweist, wobei zwei Hebel des ersten Verbindungstyps (4A, 4C) einen mittleren Hebel des zweiten Typs (4B) umgeben.

7. Öffnungssystem nach einem der vorhergehenden Ansprüche, wobei sich eine Isolationsplatte (31) von einem Endbereich (3e) der Rumpfhaut (30) erstreckt und diese Platte (31) vor diesem Bereich (3e) auf einer Türdichtung (2j) aufliegt, wenn sich die Tür (20) in geschlossener Position befindet.

8. Öffnungssystem nach einem der vorhergehenden Ansprüche, wobei ein Massenausgleichssystem (50) in der Tür (20) in Verlängerung mindestens eines der Hebel (4B) eingebaut ist.

9. Öffnungssystem nach dem vorhergehenden Anspruch, **dadurch gekennzeichnet, dass** das Ausgleichssystem (50) mindestens einen Zylinder (51, 52) aufweist, der in Verlängerung mindestens eines Hebels (4A bis 4B) angeordnet ist, des mittleren Hebels (4B) im Falle eines Satzes von Verbindungen mit drei Hebeln nach Anspruch 6.

10. Öffnungssystem nach einem der vorhergehenden Ansprüche, wobei die Beschläge (42), die auf dem oberen Türpfosten (2S) befestigt und mit den Gelenken (5b) der Hebel (4A, 4C) des ersten Verbindungstyps verbunden sind, eine Schwanenhalsform aufweisen, während die Hebel (4B) des zweiten Verbindungstyps ein seitliches Profil mit gekrümmter Form aufweisen, die zum oberen Türpfosten (2S) gewandt ist.

11. Öffnungssystem nach einem der vorhergehenden Ansprüche, wobei eine Versteifungsstange (7) parallel zum Sturz (11) die Gelenke (5a) der Hebel (4A, 4C) des ersten Verbindungstyps verbindet, die am weitesten von der Haut des Rumpfs (30) entfernt sind.

## Claims

1. Opening system (10) for an auxiliary door (20) of an airplane in a fuselage, the door and the fuselage having skins (20, 30) in the extension of one another, said system (10) comprising a lintel (11), for framing the auxiliary door, integrated into the fuselage, and an upper door structure beam (2S) arranged facing the lintel (11), **characterized in that** said system comprises a set of at least three lever links (4A, 4B, 4C) extending transversely with respect to the door skin (20) and fuselage skin (30) to form a coupling of the door (20) to the lintel (11), **in that** each link is connected, on the one hand, to said lintel (11) by a lever articulation (5a, 6a) fixed relative to the fuselage (30) and, on the other hand, to said upper beam (2S) by a lever articulation (5b, 6b) pivotally mobile with the door (20) when it opens, the articulations (5a, 5b; 6a, 6b) being formed at the end of the levers (4A, 4C; 4B) and connected respectively to the lintel (11) and to the upper beam (2S) by fixing means (41, 43; 42, 44), and **in that** the set of links comprises a first and a second successive type of link mounted alternately, in which the pivotally mobile articulations (5b, 6b) and the fixed articulations (5a, 6a) are positioned head to tail, so that the mobile and fixed articulations (5b, 5a; 6b, 6a) of two adjacent levers (4A, 4B; 4B, 4C) form an evolving quadrilateral which controls the kinematics of opening the door (20) maintaining flexibility of articulation between the lintel (11) and the upper beam (2S).

2. Opening system according to Claim 1, in which, the upper door structure beam (2S) having an upper face (2a) perpendicular to the door skin (20), a fitting (42) as a fixing means connecting the articulations (5b) of the levers (4A, 4C) of the first type of link to said upper beam (2S) comprises a fixing base extending on the upper face (2a) of said beam (2S).

3. Opening system according to either one of Claims 1 and 2, in which, the lintel (11) having a lower face (11c) perpendicular to the fuselage skin (30) and a front face (11b) parallel to the fuselage skin (30), a fitting (41) as a fixing means connecting the articulations of the levers (4A, 4C) of the first type of link to the lintel (11) has a fixing face that is square partly on the lower face (11c) and partly on the front face (11a) of the lintel (11).

4. Opening system according to either one of Claims 2 and 3, in which, the upper door structure beam (2S) having a front face (2b) parallel to the door skin (20) and perpendicular to the upper face (2a) of said beam (2S), a fitting (44) as a fixing means connecting the articulations (6b) of the levers (4B) of the second type of link to the upper door structure beam (2S) is partly fixed on the upper face (2a) and partly on the front face (2b) of said upper beam (2S).

5. Opening system according to either one of Claims 3 and 4, in which a fitting (43) as fixing means which connects the articulations (6a) of the levers (4B) of the second type of link to the lintel (11) has a fixing base extending on the lower face (11c) of the lintel (11).

6. Opening system according to any one of the preceding claims, in which the set of links comprises three levers (4A, 4B, 4C), two levers of the first type of link (4A, 4C) surrounding a central lever of the second type (4B).

7. Opening system according to any one of the preceding claims, in which an insulation panel (31) extends from an end region (3e) of the fuselage skin (30) and in front of this zone (3e), this panel (31) pressing against a door seal (2j) when the door (20) is in the closed position.

8. Opening system according to any one of the preceding claims, in which a mass compensation system (50) is installed in the door (20) in the extension of at least one of the levers (4B).

9. Opening system according to the preceding claim, **characterized in that** the compensation system (50) comprises at least one jack (51, 52) arranged in the extension of at least one lever (4A to 4B), the central lever (4B) in the case of a three-lever set of links according to Claim 6.

10. Opening system according to any one of the preceding claims, in which the fittings (42) fixed on the upper door beam (2S) and connected to the articulations (5b) of the levers (4A, 4C) of the first type of link are in the form of a gooseneck, while the levers (4B) of the second type of link have a lateral profile of curved shape facing the upper door beam (2S).

11. Opening system according to any one of the preceding claims, in which a stiffening bar (7) connects, parallel to the lintel (11), the articulations (5a) of the levers (4A, 4C) of the first type of link furthest from the skin of the fuselage (30).
